# EUROPÄISCHE PATENTANMELDUNG

(11) **EP 1 231 090 A2**
(43) Veröffentlichungstag der Anmeldung: **14.08.2002**
(21) Anmeldenummer: 02002595.3
(22) Anmeldetag: 05.02.2002
(51) Int. Cl.: B60H 1/00

(54) **Baukastensystem für einen elektrischen Stellantrieb, insbesondere für Heizungs-, Lüftungs- oder Klimaklappen in einem Kraftfahrzeug**

(30) Priorität: 07.02.2001 DE 10105437
(71) Anmelder: Hella KG Hueck & Co., 59552 Lippstadt (DE)
(72) Erfinder: Stebner, Volkmar, 33142 Büren (DE); Schiller, Jan, 48155 Münster (DE); Bücker, Bodo, 59821 Arnsberg (DE)

(57) **Zusammenfassung**

Es wird ein Baukastensystem für einen elektrischen Stellantrieb, insbesondere für Heizungs-, Lüftungs- oder Klimaklappen in einem Kraftfahrzeug beschrieben. Die Stellantriebe dieses Baukastenystems bestehen aus
- einem zweiteiligen Gehäuse mit einem Gehäuseunterteil und einem Gehäuseoberteil,
- einem in dem Gehäuse angeordneten elektrischen Antriebsmotor,
- einer in dem Gehäuse angeordneten Abtriebswelle.

Das Gehäuseunterteil weist einen Aufnahmebereich und Positioniermittel (1, 2) für eine hinsichtlich der Abtriebswelle positionsgenaue, herausnehmbare Aufnahme von Platinen (3) unterschiedlichen Funktionstyps auf, wobei die Platinentypen sich hinsichtlich des Vorhandenseins, der Anordnung und/oder der Ausbildung von Widerstandsschleifbahnen (8) und/oder von elektrisch leitenden Schleifflächen (9), welche zur Detektion der Drehwinkelposition der Abtriebswelle und/oder zur Abschaltung des Antriebsmotors in einer definierten Drehwinkelposition der Abtriebswelle dienen, unterscheiden.

## Beschreibung

Die Erfindung bezieht sich auf ein Baukastensystem für einen elektrischen Stellantrieb, insbesondere für Heizungs-, Lüftungs- oder Klimaklappen in einem Kraftfahrzeug.
Ein gattungsgemäßer Stellantrieb besteht aus einem zweiteiligen Gehäuse mit einem Gehäuseunterteil und einem Gehäuseoberteil, einem in dem Gehäuse angeordneten elektrischen Antriebsmotor und einer in dem Gehäuse angeordneten Abtriebswelle.
Dabei sind unterschiedliche Funktionstypen von Stellantrieben bekannt. Bei Stellantrieben der einfachsten Art ist weder eine Detektion der Drehwinkelposition der Abtriebswelle noch eine interne Endlagenabschaltung in definierten Drehwinkelpositionen der Abtriebswelle vorgesehen. Daneben gibt es Stellantriebe, bei denen über im Gehäuse angeordnete Widerstandsschleifbahnen in Verbindung mit einer Schleiffeder, welche konzentrisch an der Abtriebswelle angeordnet ist, eine Detektion der Drehwinkelposition der Abtriebswelle möglich ist. Auch hier sind wiederum unterschiedliche Anordnungen und Ausbildungen der Widerstandsschleifbahnen möglich, z.B. hinsichtlich unterschiedlicher Drehwinkelbereiche. Darüber hinaus gibt es Stellantriebe, die über elektrisch leitende Schleifflächen in Verbindung mit der an der Abtriebswelle angeordneten Schleiffeder eine automatische Abschaltung des Antriebsmotors in einer definierten Drehwinkelposition der Abtriebswelle ermöglichen. Auch hier sind wiederum unterschiedliche Anordnungen der Schleifflächen möglich. Ferner sind unterschiedliche Kombinationen von Schleifflächen und Widerstandsschleifbahnen denkbar.

Die Stellantriebe unterscheiden sich somit hinsichtlich des Vorhandenseins, der Anordnung und der Ausbildung von Mitteln zur Drehwinkeldetektion und Endlagenabschaltung.

Bei den bisher bekannten Stellantrieben sind aufwendige und kostenintensive Änderungen, insbesondere am Gehäuse, notwendig, um die Funktionalität eines Stellantriebs zu ändern.

Aufgabe der Erfindung ist daher, die Schaffung eines Baukastensystems für gattungsgemäße Stellantriebe, mit dem in einfacher und kostengünstiger Weise in einem Gehäusetyp unterschiedliche funktionale Arten von Stellantrieben realisierbar sind.
Diese Aufgabe wird erfindungsgemäß dadurch gelöst, dass das Gehäuseunterteil einen Aufnahmebereich und Positioniermittel für eine hinsichtlich der Abtriebswelle positionsgenaue, herausnehmbare Aufnahme von Platinen unterschiedlichen Funktionstyps aufweist. Dabei unterscheiden sich die Platinentypen hinsichtlich des Vorhandenseins, der Anordnung und/oder der Ausbildung von Widerstandsschleifbahnen und/oder von Schleifflächen.

Damit lassen sich durch Bestückung eines einzigen Gehäusetyps mit unterschiedlichen Platinen in einfacher und kostengünstiger Weise elektrische Stellantriebe mit unterschiedlichen Funktionen realisieren. Mit anderen Worten lassen sich Stellantriebe mit unterschiedlichen Funktionalitäten in einfacher Weise durch unterschiedliche Platinenlayouts realisieren, wobei die Schleiffedern an der Abtriebswelle jeweils auf das Platinenlayout abgestimmt sind. Selbstverständlich kann auch das Gehäuseoberteil anstatt des Gehäuseunterteils den Aufnahmebereich und die Positioniermittel aufweisen.

Anhand der beigefügten Zeichnungen soll die Erfindung nachfolgend näher erläutert werden. Es zeigt:
- Figur 1: eine Draufsicht auf das Gehäuseunterteil des Stellantriebs ohne Platine, Antriebsmotor und Abtriebswelle,
- Figur 2: eine Draufsicht wie in Figur 1, jedoch mit eingelegter Platine,
- Figur 3: einen Schnitt durch das Gehäuseunterteil entlang der Linie E-E,
- Figur 3A: einen Schnitt wie in Figur 3, jedoch vor dem Einsatz des Steckverbinders,
- Figur 4: einen Draufsicht auf einen ersten Platinentyp,
- Figur 4A: eine Seitenansicht des ersten Platinentyps,
- Figur 5: eine Draufsicht auf einen zweiten Platinentyp,
- Figur 5A: eine Seitenansicht des zweiten Platinentyps,
- Figur 6: eine Draufsicht auf einen dritten Platinentyp,
- Figur 6A: eine Seitenansicht des dritten Platinentyps.

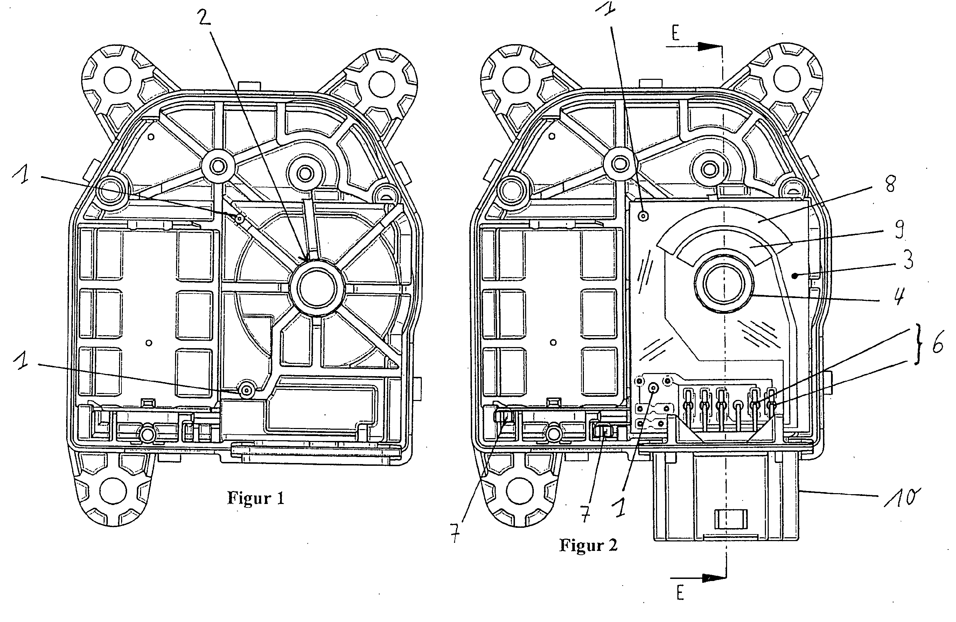

In Figur 1 ist eine Draufsicht auf das leere Gehäuseunterteil des Stellantriebs gezeigt. In dieses Gehäuseunterteil werden der Antriebsmotor, die Platine, die Abtriebswelle (ggf. mit einer Schleiffeder) sowie Getriebezahnräder, welche die Antriebswelle des Antriebsmotors mit der Abtriebswelle koppeln, herausnehmbar eingesetzt. Nachdem das Gehäuseunterteil so entsprechend bestückt wurde, wird das Gehäuseoberteil aufgesetzt und beide Gehäusehälften über eine Rastverbindung lösbar miteinander verbunden. Antriebsmotor, Abtriebswelle und Getriebezahnräder sind aus Gründen der Übersichtlichkeit in keiner der Figuren dargestellt.

Das Gehäuseunterteil weist in der rechten Hälfte einen Aufnahmebereich für die Platine (3) auf. Um die Abtriebswelle aus dem Gehäuse herauszuführen, weist das Gehäuseunterteil eine Öffnung in Form einer zylindrischen Hülse (2) auf. Hierdurch wird die Lage der Abtriebswelle im Gehäuse definiert. Die Platine (3) ― siehe Figur 2 ― liegt auf Stegen im Gehäuseunterteil auf. Zur positionsgenauen Aufnahme der Platine hinsichtlich der Abtriebswelle greift die Hülse (2) zumindest teilweise in eine Öffnung (4) der Platine (3) zur Durchführung der Abtriebswelle ein, wodurch die Platine (3) in ihrer Lage zur Abtriebswelle fixiert wird. Zusätzlich weist das Gehäuseunterteil zwei Positionierstifte (1) als Positioniermittel auf, die in entsprechende Positionslöcher (5) der Platine (3) eingreifen.

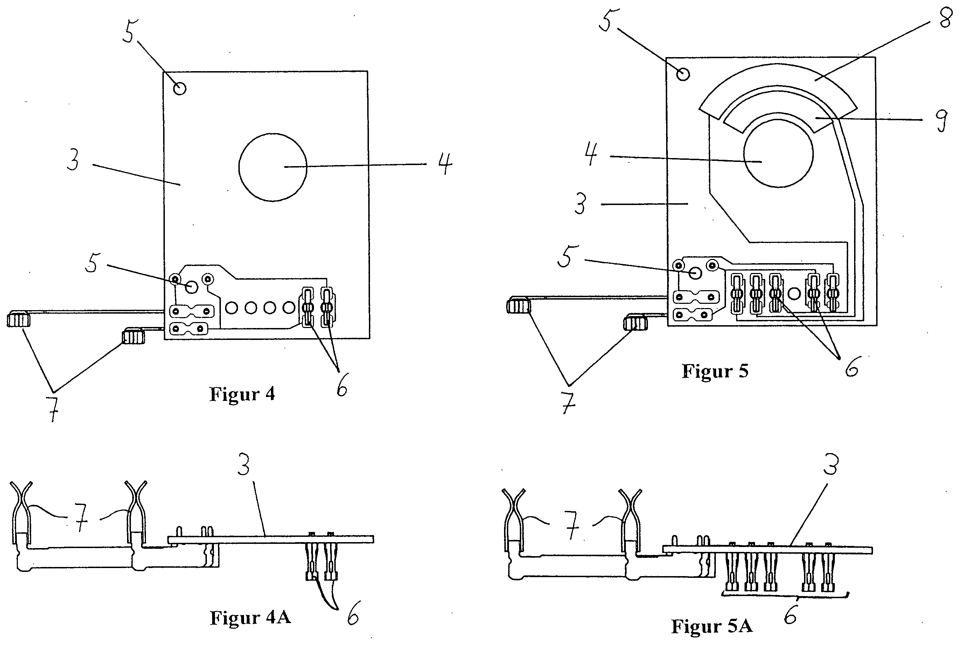

In den Figuren 4 bis 5 sind drei verschiedene Platinentypen dargestellt. Alle Platinen (3) weisen eine rechteckige Grundfläche mit denselben Außenabmessungen, zwei jeweils an denselben Stellen angeordnete Positionslöcher (5) sowie eine kreisrunde Öffnung (4) zur Durchführung der Abtriebswelle und zur Positionierung der Platine auf. Außerdem weisen alle Platinen (3) beabstandet von der Öffnung (4) - und damit vom Drehbereich der Abtriebswelle ― Mittel (6) zur elektrischen Kontaktierung des Antriebsmotors mit außerhalb des Gehäuses angeordneten Anschlussverbindungen auf. Diese Mittel bestehen aus in die Platine eingelöteten Kontaktbuchsen (6), in die Steckerstifte eines Steckverbinders (10) eingreifen, über den dann die elektrische Verbindung mit außerhalb des Gehäuses liegenden Anschlüssen erfolgt. Die Kontaktbuchsen (6) für die Kontaktierung sind mit Klemmkontakten (7) verbunden, in die Kontaktfahnen des Antriebsmotors eingreifen. Die Klemmkontakte (7) werden ebenfalls von der Platine (3) getragen. Beabstandet von der Durchführöffnung (4) und in der Nähe der Kontaktbuchsen ist Platz für elektrische (elektronische) Bauelemente vorgesehen, z.B. für einen Entstörkondensator für den Antriebsmotor.

Der in Figur 4 gezeigte Platinentyp ist der einfachste Platinentyp. Dieser Platinentyp weist weder Widerstandsschleifbahnen noch Schleifflächen auf. Er weist lediglich die für das Baukastensystem standardmäßigen Merkmale auf: rechteckige Grundfläche, Positionslöcher, Durchführöffnung für die Abriebswelle und Kontaktbuchsen mit Kontaktklemmen für den Antriebsmotor.

Der in Figur 5 gezeigte Platinentyp weist eine konzentrisch zur Durchführöffnung (4) angeordnete Widerstandsschleifbahn (8) sowie eine korrespondierende, ebenfalls konzentrisch zur Durchführöffnung (4) verlaufende Schleiffläche (9) auf, über die das von der Schleiffeder abgegriffene, drehwinkelabhängige Spannungspotential zurückgemeldet wird. Zur elektrischen Kontaktierung der Widerstandsschleifbahn (8) und der Schleiffläche (9) ist die Platine (3) mit drei zusätzlichen Kontaktbuchsen (6) bestückt. Dieses Platinenlayout gestattet die Detektion der Drehwinkels der Abtriebswelle in einem bestimmten Winkelbereich.

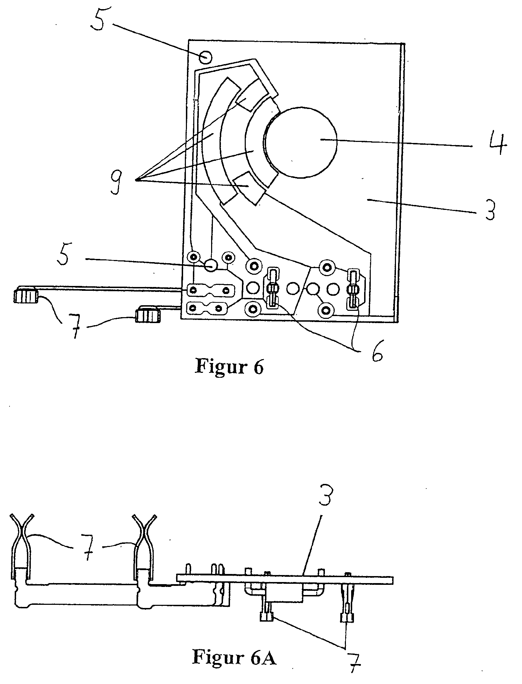

Der in Figur 6 gezeigte Platinentyp weist mehrere konzentrisch zur Durchführöffnung (4) angeordnete Schleifflächen (9) auf, die eine automatische Endlageabschaltung des Antriebsmotors in zwei definierten Winkellagen der Abtriebswelle ermöglichen.

Je nachdem, welcher Platinentyp gewählt wird, lässt sich somit ein Stellantrieb mit unterschiedlicher Funktionalität realisieren:
- ohne Detektion des Drehwinkels der Abtriebswelle und ohne automatische Endlagenabschaltung,
- mit Detektion des Drehwinkels der Abtriebswelle und/oder mit automatischer Endlagenabschaltung.

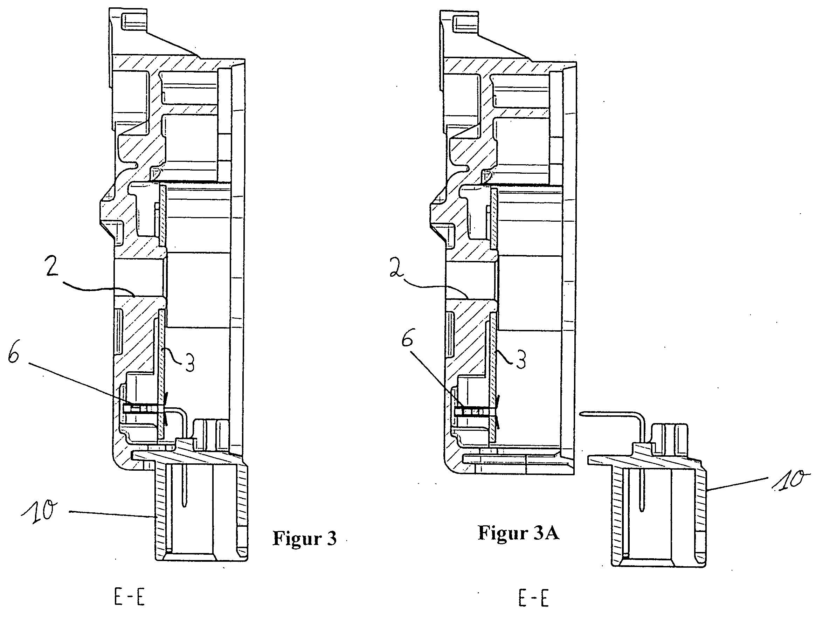

Der Steckverbinder (10), der als Interface zwischen den Kontaktbuchsen (6) auf der Platine (3) und außerhalb des Gehäuses liegenden Anschlussverbindungen dient, ist vorzugsweise herausnehmbar in das Gehäuseunterteil über Schlitze einschiebbar ― siehe Figur 3 und 3A. Somit ist auch der Steckverbinder (10) ein modulares Bauteil in dem Baukastensystem, denn auch für den Steckverbinder sind verschieden Ausführungsformen vorgesehen, die sich hinsichtlich der Geometrie des Steckverbinders und/oder in der Anzahl und/oder der Anordnung der Steckerstifte unterscheiden.

### Bezugszeichenliste

- 1): Positionieerstife im Gehäuseunterteil
- 2): Zylinderförmige Hülse zur Durchführung und Lagerung der Abtriebswelle im Gehäuseunterteil
- 3): Platine
- 4): Durchführöffnung in der Platine für die Abtriebswelle
- 5): Positionslöcher in der Platine
- 6): Kontaktbuchsen auf der Platine
- 7): Klemmkontakte für die Kontaktfahnen am Antriebsmotor
- 8): Widerstandsschleifbahn
- 9): Schleiffläche
- 10): Steckverbinder

## Patentansprüche

1. Baukastensystem für einen elektrischen Stellantrieb, insbesondere für Heizungs-, Lüftungs-oder Klimaklappen in einem Kraftfahrzeug bestehend aus
- einem zweiteiligen Gehäuse mit einem Gehäuseunterteil und einem Gehäuseoberteil,
- einem in dem Gehäuse angeordneten elektrischen Antriebsmotor,
- einer in dem Gehäuse angeordneten Abtriebswelle,
**dadurch gekennzeichnet, dass**
das Gehäuseunterteil einen Aufnahmebereich und Positioniermittel (1, 2) für eine hinsichtlich der Abtriebswelle positionsgenaue, herausnehmbare Aufnahme von Platinen (3) unterschiedlichen Funktionstyps aufweist, wobei die Platinentypen sich hinsichtlich des Vorhandenseins, der Anordnung und/oder der Ausbildung von Widerstandsschleifbahnen (8) und/oder von elektrisch leitenden Schleifflächen (9), welche zur Detektion der Drehwinkelposition der Abtriebswelle und/oder zur Abschaltung des Antriebsmotors in einer definierten Drehwinkelposition der Abtriebswelle dienen, unterscheiden.

2. Baukastensystem nach Anspruch 1,
**dadurch gekennzeichnet, dass**
die Platine (3) eine Öffnung (4) zur Durchführung der Abtriebswelle aufweist.

3. Baukastensystem nach einem der vorstehenden Ansprüche,
**dadurch gekennzeichnet, dass**
das Gehäuseunterteil eine Hülse (2) zur Durchführung der Abtriebswelle aufweist.

4. Baukastensystem nach Anspruch 2 und 3,
**dadurch gekennzeichnet, dass**
die Hülse (2) zumindest teilweise in die Öffnung (4) der Platine (3) eingreift.

5. Baukastensystem nach Anspruch 1,
**dadurch gekennzeichnet, dass**
das Gehäuseunterteil zur positionsgenauen Aufnahme der Platine (3) mindestens einen Positionierstift (1) aufweist, der in ein Positionsloch (5) der Platine eingreift oder umgekehrt.

6. Baukastensystem nach einem der vorstehenden Ansprüche,
**dadurch gekennzeichnet, dass**
die Platinen (3) in einem Bereich außerhalb des Drehbereichs der Abtriebswelle Mittel (6) zur elektrischen Kontaktierung des Antriebsmotors und/oder der Widerstandsschleifbahn (8) und/oder der Schleiffläche (9) mit einer außerhalb des Gehäuses angeordneten Anschlussverbindung aufweisen.

7. Baukastensystem nach Anspruch 6,
**dadurch gekennzeichnet, dass**
in diesem Bereich mindestens ein elektrisches Bauelement angeordnet ist.

8. Baukastensystem nach einem der vorstehenden Ansprüche,
**gekennzeichnet durch**
einen in der unteren Gehäusehälfte herausnehmbar einschiebbaren Steckverbinder, über den die Mittel (6) zur elektrischen Kontaktierung des Antriebsmotors und/oder der Widerstandsbahn (8) und/oder der Schleiffläche (9) mit einer außerhalb des Gehäuses angeordneten Anschlussverbindung verbindbar sind.
